# EUROPEAN PATENT APPLICATION

(11) **EP 4 516 606 A1**
(43) Date of publication of application: **05.03.2025**
(21) Application number: 23194821.7
(22) Date of filing: 01.09.2023
(51) Int. Cl.: B60T 17/00, B22F 3/00, B22F 5/00

(54) **DAMPING MEMBER FOR A PNEUMATIC VALVE OF A PNEUMATIC SYSTEM OF A VEHICLE, IN PARTICULAR UTILITY VEHICLE, PNEUMATIC SYSTEM, VEHICLE, METHOD, COMPUTER PROGRAM AND/OR COMPUTER READABLE STORAGE MEDIUM**

(71) Applicant: ZF CV Systems Europe BV, 1170 Brüssel (BE)
(72) Inventor: ZYCHLA, Aleksander, 55-003 NADOLICE WIELKIE (PL); PISKADLO, Piotr, 52-311 Wroclaw (PL); BULAJ, Lukasz, 55-050 BEDKOWICE (PL)
(74) Representative: Schäferjohann, Volker

(57) **Abstract**

Damping member (100) for a pneumatic valve (205) of a pneumatic system (201) of a vehicle (200a), in particular utility vehicle (200b), wherein the valve (205) comprises an air outlet section (210) for exhausting pressurized air (220); wherein the damping member (100) is adapted to be mounted to the air outlet section (210) for damping sound emission of the pressurized air (220); the damping member (100) comprises a scaffold structure (105); and the scaffold structure (105) is adapted to damp the sound emission of the pressurized air (220) by conducting the air (220) through the scaffold structure (105).

## Description

The present disclosure relates to a damping member for a pneumatic valve of a pneumatic system of a vehicle, in particular utility vehicle. The disclosure further relates to a pneumatic system of a vehicle, in particular utility vehicle, wherein the pneumatic system comprises a valve with an air outlet section for exhausting pressurized air and a damping member, wherein the damping member is mounted to the air outlet section for damping sound emission of the pressurized air by conducting the air through the damping member. Further, the disclosure relates to a vehicle, in particular utility vehicle, comprising a damping member and/or a pneumatic system, to a method for manufacturing a damping member, and to a computer program and/or computer-readable storage medium.

Damping members for pneumatic valves are known in the prior art. There is a technical challenge to cover an exhaust area of such a valve being operatable with compressed air in order to reduce noise generated by the valve and optionally to secure the air outlet section against environmental influences, e.g., fluids and/or dust.

In the prior art, such a damping member typically comprises a cover, also called housing and/or strainer, and a mesh, also called web. The cover supports the mesh and the mesh is adapted to reduce the emission of noise.

EP 2 303 659 B2 discloses a sound damper for compressed air systems of vehicles, which comprises a housing, an insulating means and at least one web, the housing having an air inlet and an air outlet, the insulating means being arranged inside the housing, the air which flows from the air inlet to the air outlet through the housing being conducted into the insulating means by the at least one web, wherein the at least one web is arranged inside the housing.

JP 2006-29118 discloses a compact silencer structure of pneumatic equipment with reduced number of parts. A valve element is formed in a cylindrical body to open/close an exhaust port of a brake valve as pneumatic equipment. One end face in an axial direction of the cylindrical body is brought into contact with/separated from a valve seat to close/open an exhaust valve. A mesh member as a silencer element is disposed in the valve element. When the exhaust valve is opened, air passes through the mesh member which is disposed to an inner exhaust passage of the valve element, and is exhausted from the exhaust port.

Such a mesh may be made of natural materials, e.g., wool, synthetic materials, e.g., polyvinyl chloride (PVC), metal, e.g., aluminum and/or copper, and/or sintered materials, e.g., based on copper. Therein, the mesh may be made from materials and by technologies that result in a simplified shape and thus improvable damping performance and/or functional variability, e.g., the mesh may be rolled to form a cylinder and/or barrel. More complex geometries may be possible, but are cost-intensive due to a required customized production process. Thus, a balance between function and cost-effectiveness may be difficult. Further, modelling and/or realizing a specific flow path through the mesh may not or not fully controllable in such a mesh.

EP 4 194 669 A1 discloses a brake valve comprising a housing, a supply connection, a working connection, an exhaust portion and a valve member slidable from an exhaust position to an open position. The working connection is in fluid communication with the exhaust portion when the valve member is in the exhaust position and otherwise sealed from the exhaust portion. The valve member is arranged on a guide element comprising an internal channel. The guide element is preferably formed by additive manufacturing (3D-printing).

WO 2021/104896 A1 discloses a manifold for a pneumatic control panel of a railway vehicle, comprising at least one conduit for guiding a pneumatic fluid and at least one attachment section for attaching a pneumatic device. The manifold is obtained from a blank that is obtained by an additive manufacturing process.

US 11,420,607 B2 discloses an assembly that may include a valve body having a piston within a piston bore in the valve body, the piston bore including a valve chamber section and a brake pipe section such that a pressure differential between the valve chamber section and the brake pipe section moves the piston within the piston bore. The assembly may also include a slide valve seat coupled to the valve body. The slide valve may be made by an additive manufacturing process, such as metal 3D printing or impregnated powdered metal.

US 11,221,051 B2 discloses a brake system damping device including a first space to which hydraulic pressure is to be applied, a second space in which a compressible medium is situated, and a first separation element configured to separate the first space from the second space. The brake system damping device further includes a third space in which a compressible medium is situated and a second separation element configured the second space from the third space. The second space is connected in medium-conducting terms to the third space by a passage configured in the second separation element. The third space and the second separation element having the passage thereof are configured by an integral component. The cover and the second separation element herein are designed as an integral component which is produced by means of a 3D printing method.

In the light of the prior art, the object of the present disclosure is to provide a contribution to the prior art, and to provide a device being suitable for improving at least one of the above-mentioned aspects of the prior art, respectively. In particular, it is an object of the disclosure to provide a damping member with an improved balance between function and cost-effectiveness and which enable an effective valve-dependent modification.

The object is solved by the features of the independent claim. The dependent claims have further embodiments of the disclosure as their subject matter.

According to an aspect of the present disclosure a damping member for a pneumatic valve of a pneumatic system of a vehicle, in particular utility vehicle, is provided, wherein the valve comprises an air outlet section for exhausting pressurized air; wherein the damping member is adapted to be mounted to the air outlet section for damping sound emission of the pressurized air; the damping member comprises a scaffold structure; and the scaffold structure is adapted to damp the sound emission of the pressurized air by conducting the air through the scaffold structure.

The damping member is adapted to be mounted to the air outlet section. Thus, compressed air may flow from the air outlet section into and/or through the damping member. Therein, sound emission of the pressurized air is damped by conducting the air through the damping member.

To achieve damping, the damping member comprises the scaffold structure. In accordance with an embodiment, the term "scaffold structure" may refer to multiple recurring features in a one-piece part that have the attribute of attenuating the noise/vibrations at the air outlet section. In particular, the multiple recurring features are distributed in an equidistant manner from each other within the one-piece part. These noise and/or vibrations are cause by the pressurized air exiting out of the air outlet section. It is also conceivable that the scaffold structure may be a one-piece part that is composed of a plurality of elements which are attached together and/or are consolidated to form the scaffold structure. The scaffold structure is adapted to enable air flowing through the scaffold structure to be deflected, distributed and/or diffused to the atmosphere nearby. This achieves damping, i.e., a suppression of an emission of sound, e.g., of noise and/or a suppression of vibrations.

It is realized that such a scaffold structure may be an alternative to the combination of mesh and cover for exhaust solutions. A cover to support the scaffold structure and/or the damping member may be dispensed with. This may improve the cost-effectiveness and/or the manufacturing process.

Further, the scaffold structure enables a broad variety of functions and to build the damping member according to different desired and/or required constrains in relation to, e.g., the geometry and/or the damping capabilities. The scaffold structure and thus the damping member may be efficiently adapted for a dedicated design and/or geometry of the valve and its internal geometry. I.e., the scaffold structure enables an efficient customization of the damping member.

Optionally, the scaffold structure is a repetitive structure. I.e., the scaffold structure comprises repetitive portions with similar and/or equal geometric and/or mechanic properties. Additionally or alternatively, the scaffold structure is a layered structure. I.e., the scaffold structure may consist of a plurality of geometrically and/or mechanically equal, similar and/or different layers. The scaffold structure may comprise a translational symmetry. The repetitive structure and/or the layered structure enables that the scaffold structure may comprise a modular geometry, wherein the layers and/or repetitive portions may be modules for guiding the air, and wherein each of the modules may comprise a dedicated function, e.g., for suppress the emission of sound and/or of guiding the air. The repetitive structure and/or the layered structure may thus also enable different sizes of the scaffold structure, since the scaffold structure comprises a plurality of layers and/or repetitive portions.

Optionally, the scaffold structure comprises a plurality of pores for damping sound emission of the air being conducted through the damping member. Pores, e.g., cavities, may efficiently guide and distribute, deflect and/or diffuse the air within the scaffold structure to achieve damping of the emission of sound. The pores may comprise the same and/or a different typical size.

Optionally, the damping member is made by an additive manufacturing process. The damping member may efficiently be designed and manufactured without any process restrictions known from the standard injection and demolding. The damping member may be shaped in forms which may not be achieved with other methods, e.g., by injection molding. The additive manufacturing process may provide an increased accuracy in manufacturing the scaffold structure and/or smaller pores, layers and/or repetitive portions are achievable than with injection molding and/or by providing a mesh. An additive manufacturing process may provide a variety of possible shapes and damping characteristics. Further, functional portions, mounting portions and/or functional guiding members may be integrally formed with the damping member.

Optionally, the scaffold structure comprises a functional guiding member adapted to guide the air through the damping member, and the functional guiding member is adapted to deflect a main air flow of the air and/or to split the air into a plurality of sub-flows. I.e., the scaffold structure enables that the damping member may comprise different forms as functional guiding members in different regions of the scaffold structure, which may not be possible using conventional manufacturing technologies. The functional guiding member may be used to influence a principal flow direction of the air within the damping member and/or to split the flow into a plurality of sub-flow for an enhanced damping and/or for further guiding the sub-flows through the damping member.

Optionally, the damping member defines a flow direction of air being conducted through the damping member; and the functional guiding member is adapted to reverse at least one component of the flow direction while the air is conducted through the damping member and/or the functional guiding member comprises a labyrinth-type, meandering and/or undulating shape. Therein, it is realized that reversing a component of the flow direction may further enhance the capabilities of the damping member to reduce the emission of sound. For this reason, the functional guiding member comprises a shape that achieves the reversal of the component of the flow direction. For example, the functional guiding member comprises the labyrinth-type, the meandering and/or the undulating shape.

Optionally, the damping member is made of a polymer, in particular of a thermoplastic and/or a thermoset polymer, of metal and/or of a composite material. These materials enable an efficient manufacture of the damping member in particular of the scaffold structure. Further, these materials may achieve required mechanical properties of the scaffold structure. However, other materials may be possible, e.g., hard resins, soft resins, bioprinting materials. The composite material may be used for manufacturing the damping member with different portions with a specific material, depending on its function. E.g., the scaffold structure may be made from a thermoplastic and a cover and/or cap may be made from metal. The thermoset polymer, also called resin, e.g., a duroplast, enables that the damping member and/or the scaffold structure may be manufactured by stereolithography or other types of manufacturing technology (in particular additive manufacturing technologies) consisting on hardening liquid material.

Optionally, the damping member comprises a mounting portion for fixating the damping member directly to a valve body of the valve. The mounting portion, i.e., mounting feature, may comprise a clip member, a hole being adapted to be used with a fastening means, and/or any other type of connection. The mounting portion may achieve an improvement of the efficiency of assembling the valve, and in particular of attaching the damping member to the valve.

Optionally, the damping member comprises one or more functional portions to impede water ingress, for creating a pressure gradient, for self-cleaning and/or for providing a mounting portion for a sensor. The functional portions may guide the air to create a pressure difference, e.g., one of the functional portions may create a low-pressure section to induce a suction and/or self-cleaning feature. Additionally or alternatively, the functional portions may shield an inner portion of the scaffold structure from environmental influences, e.g., the ingress of water, other fluids and/or dust. E.g., an integrally formed cover cap and/or an integrally formed component as a safeguard against water ingress and being arranged in an outlet area may be provided. Additionally or alternatively, the damping member comprises one or more functional portions for providing a mounting portion for a pressure sensor. The functional portions may be adapted for mounting a sensor to the scaffold structure and/or into the damping member. The mounting portion may be arranged so that the sensor is enabled to measure the air flow through the scaffold structure and/or the damping member and/or the exhausted air.

According to an aspect of the disclosure, a pneumatic system of a vehicle, in particular utility vehicle, is provided, wherein the pneumatic system comprises a valve with an air outlet section for exhausting pressurized air and a damping member as described above, wherein the damping member is mounted to the air outlet section for damping sound emission of the pressurized air by conducting the air through the damping member. Optionally, the damping member comprises one or more of the aforementioned optional and/or preferred features to achieve a corresponding technical effect.

Optionally, the pneumatic system is a pneumatic suspension system and/or a pneumatic brake system. Therein, it is realized that the air may comprise a particular large pressure in such a pneumatic suspension system and/or in such a pneumatic brake system. Thus, the emission of sound which may depend on the damping member is particularly crucial for such systems.

According to an aspect of the disclosure, a vehicle, in particular utility vehicle, is provided, comprising a damping member as described above and/or a pneumatic system as described above. Optionally, the damping member and/or the pneumatic system comprises one or more of the aforementioned optional and/or preferred features to achieve a corresponding technical effect.

According to an aspect of the disclosure, a method for manufacturing a damping member as described above is provided, wherein the method comprises the steps of: obtaining a model of the damping member; and additive manufacturing, based on the model, the damping member. Optionally, the method is performed so that the damping member comprises one or more of the aforementioned optional and/or preferred features to achieve a corresponding technical effect.

The method is particularly suitable for a series production of the damping member. Therein, the model is to be obtained once, and a plurality of damping members may be manufactured by additive manufacturing based on the model.

Optionally, the model is dependent on a geometry of the valve, of the air outlet section and/or of a valve body. Therein, it is realized that the damping member, i.e., its geometry and/or shape, is affected by the geometry of the valve and in particular of the geometry of the air outlet section and/or of the valve body. Thus, the model may be created so that the valve, the air outlet section and/or the valve bodies is considered appropriately.

According to an aspect of the disclosure, a computer program and/or computer-readable storage medium, is provided, comprising instructions which, when the program is executed by a data processing device causes the data processing device to carry out the method as described above and/or comprising a data set that represents the model of the damping member. Optionally, the computer program and/or computer-readable storage medium may comprise instructions which, when the program is executed by a data processing device causes the data processing device to carry out one or more optional and/or preferred features of the method as described above, and/or comprises a data set that represents the model of the damping member with one or more of the above-described optional and/or preferred features.

An embodiment according to an aspect of the present disclosure is described with reference to the Figures below.
Fig. 1 shows schematically a vehicle, in particular utility vehicle, according to an embodiment of the disclosure;
Fig. 2 shows a perspective view of a detail of a pneumatic valve and a damping member according to an aspect of the disclosure;
Fig. 3 shows two perspective views of a damping member according to an aspect of the disclosure;
Fig. 4 shows sections of damping members according to an aspect of the disclosure;
Fig. 5 shows a schematic chart of a method according to an embodiment of the disclosure; and
Fig. 6 shows a schematic of a computer program and/or computer-readable storage medium according to an embodiment of the disclosure.

In the following embodiments are described with reference to the Figures, wherein the same reference signs are used for the same objects throughout the description of the Figures and wherein the embodiment is just one specific example for implementing the disclosure and does not limit the scope of the disclosure as defined by the claims.

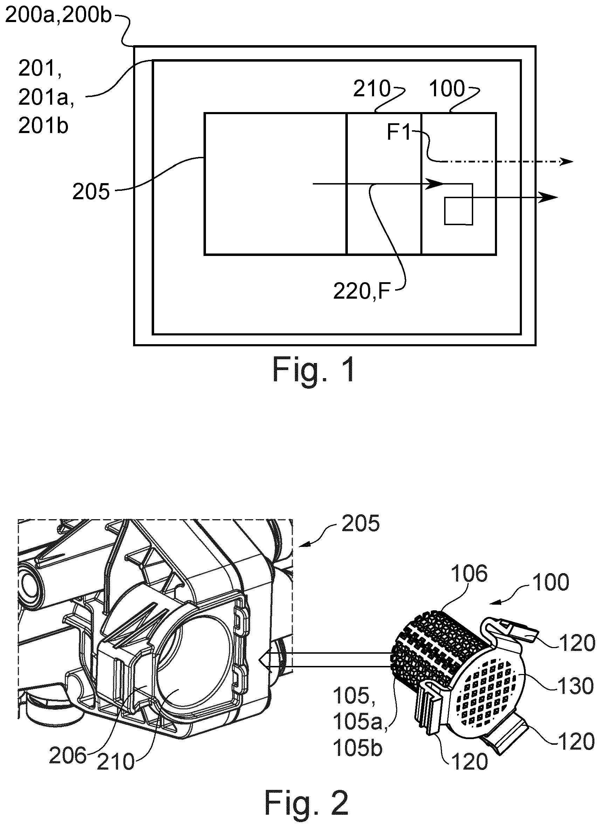

Figure 1 shows schematically a vehicle 200a, in particular utility vehicle 200b, according to an embodiment of the disclosure. In the following, the vehicle 200a, in particular utility vehicle 200b, is referred to as vehicle 200a, 200b. The vehicle 200a, 200b is a land vehicle 200a, 200b, e.g., a truck, a trailer, a vehicle train, a bus and/or a passenger car.

The vehicle 200a, 200b comprises a pneumatic system 201. The pneumatic system 201 is or comprises a pneumatic suspension system 201a and/or a pneumatic brake system 201b.

The pneumatic suspension system 201a is adapted to support the vehicle 200a, 200b on a ground. The pneumatic suspension system 201a may comprise pneumatically actuatable components. Therein, pressurized air 200 is provided and controlled to actuate the pneumatic suspension system 201a.

The pneumatic brake system 201b is adapted to brake the vehicle 200a, 200b, i.e., a brake request by a driver of the vehicle 200a, 200b and/or by an automated driving function may lead to a pneumatic and/or an electro-pneumatic actuation of the pneumatic brake system 201b to trigger the application of a braking torque. Therein, pressurized air 220 is provided and controlled to actuate the pneumatic brake system 201b.

The pneumatic system 201 comprises a valve 205 with an air outlet section 210 for exhausting the pressurized air 220. The valve 205 is adapted to control the flow of the air 220. The valve 205 may be mechanically and/or electronically controlled to be actuated to control the flow of the air 220. The valve 205 is adapted to exhaust the air 220 through the air outlet section. The exhaustion of the air 220 may induce sound, e.g., noise.

The valve 205 comprises a damping member 100 being mounted the air outlet section 210 and/or the damping member 100 is attached to the air outlet section 210. The damping member 100 is adapted to damp the emission of sound caused by the pressurized air 220 by conducting the air 220 through the damping member 100.

The damping member 100 is further described with reference to Figures 2 to 4.

Figure 2 shows a perspective view of a detail of a pneumatic valve 205 and a damping member 100 according to an aspect of the disclosure. Such a valve 205 and damping 100 are illustrated schematically in Figure 1 and are described with reference thereto. Figure 2 is described under reference to Figure 1.

Figure 2 shows that the valve 205 comprises a housing 206. The housing 206 is adapted to house a plurality of components of the valve 205, in particular a fluid channel, a piston, and an elastic element, such as a spring (not shown). Air 220 may be exhausted from the valve 205. The exhaust the air 220, the valve 205 comprises the air outlet section 210. The air outlet section 210 comprises an opening in the housing 206 through which the air 220 may be exhausted from the valve 205 into an environment of the valve 205. The valve 205 is an example of a valve 205 for a lift axle pressure distributor.

The damping member 100 is (as schematically indicated by a double arrow) adapted to be attached and/or mounted to the valve 205, in particular to the housing 206 and to the air outlet section 210. The damping member 100 comprises a mounting portion 120 for fixating the damping member 100 directly to the valve body 206 of the valve 205. The mounting portion 120 comprises three circumferentially arranged clip members (not indicated). The mounting portion 120 is elastically deformable to enable clipping the clip members to the valve body 206.

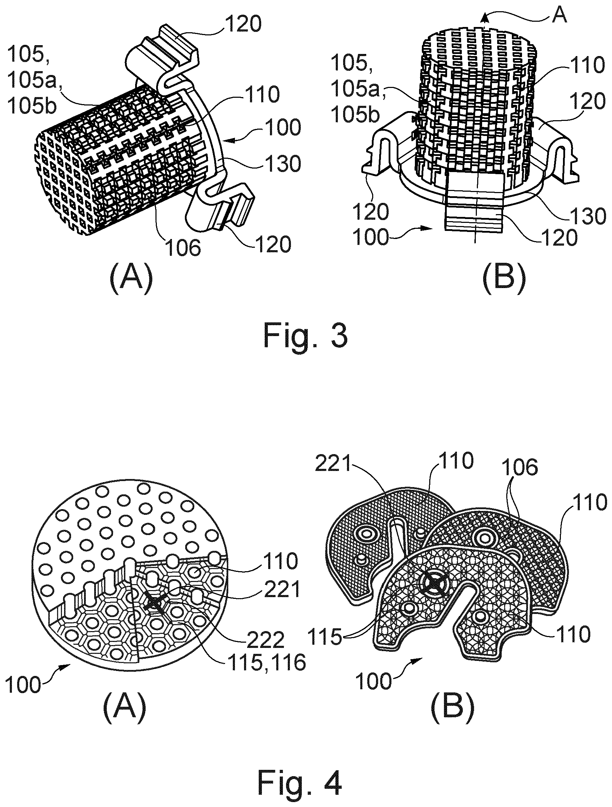

The damping member 100 comprises a scaffold structure 105. The scaffold structure 105 is adapted to damp the sound emission and/or vibration caused by the exit of the pressurized air 220 by conducting the air 220 through the scaffold structure 105. The scaffold structure 105 comprises a plurality of structural elements 106 that are consolidated together to form the scaffold structure 105. The plurality of structural elements 106 are adapted and arranged to form a repetitive structure 105a and a layered structure 105b as the scaffold structure 105. Thus, the structural elements 106 may be arranged in layers and repeatedly, e.g., periodically. The structural elements 106 may equal each other (Figures 2 and 3) an/or differ from each other (Figure 4). The term "scaffold structure" may refer to multiple recurring features in a one-piece part or the scaffold structure 105 as displayed in Figures 2, 3 and 4 that have the attribute of attenuating the noise/vibrations at the air outlet section. In particular, the multiple recurring features are distributed in an equidistant manner from each other within the one-piece part. These noise and/or vibrations are cause by the pressurized air exiting out of the air outlet section. It is also conceivable that the scaffold structure may be a one-piece part that is composed of a plurality of elements which are attached together and/or are consolidated to form the scaffold structure. The scaffold structure is adapted to enable air flowing through the scaffold structure to be deflected, distributed and/or diffused to the atmosphere nearby. This achieves damping, i.e., a suppression of an emission of sound, e.g., of noise and/or a suppression of vibrations.

The damping member 100 comprises a plurality of pores 110 for damping sound emission of the air 220 being conducted through the damping member 100. The pores 110 are arranged between the structural elements 106. I.e., cavities and/or voids between the structural elements 106 form and provide the pores 110. The pores 110 are arranged and adapted to enable a flow of the air 220 through the pores 110. The air 220 is deflected by the pores 110 and a speed of the air 220 may be reduced by the pores 110.

The damping member 100 comprises one or more functional portions 130 to impede water ingress, for creating a pressure gradient, for self-cleaning and/or for providing a mounting portion for a sensor (not shown). In Figure 2, the functional portions 130 is formed as a cap, cover and/or a plate at a base surface of the essentially cylindrical scaffold structure 105. The functional portions 130 shields the scaffold structure 105 and/or an interior thereof from water and/or dust. In particular the functional portions 130 impedes water ingress. Further, the functional portions 130 comprises a plurality of openings to enable a fluid communication between the pores 110 and an environment to guide air 220 out of the scaffold structure 105.

The damping member 100 is made of a polymer, in particular of a thermoplastic and/or a thermoset polymer. In another embodiment (not shown), the damping member 100 is made of metal and/or of a composite material.

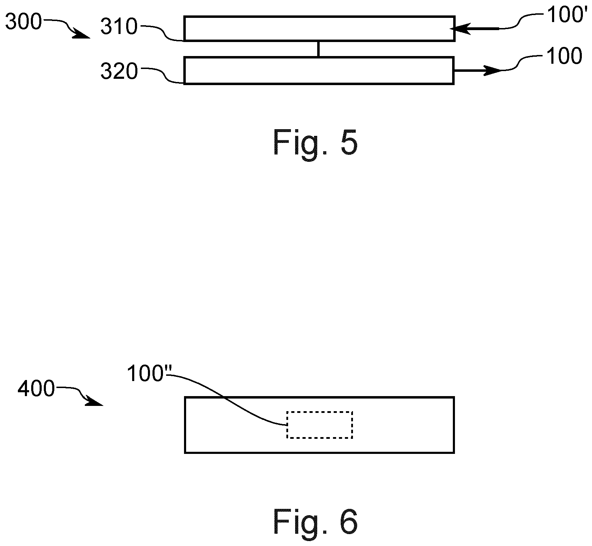

The damping member 100 is made by an additive manufacturing process (see also Figure 5). The damping member 100 may be manufactured by using a so-called 3D printing process to shape and manufacture necessary parts and elements of the damping member 100, in particular the scaffold structure 105. The additive manufacturing process is based on a model 100' (see Figure 5) of the damping member 100, wherein the flow, noise reduction properties, safeguards against environmental conditions and/or other not desirable influences as desired for specific valve design may be considered. The shape and/or geometry of the damping member 100 is individually adjustable for dedicated design and available valve internal geometry. The damping member 100 may be a single-piece which integrates into exhaust area of the valve 205. The damping member 100 may be designed to form protection of, e.g., water ingress and also to release air to escape freely from the confined volume. The scaffold structure 105 reduces noise and enables a is high ability to prevent dirt and water ingress, a broad variability of shaping, of size forming and/or to control of flow parameters. Different filtering grades may provide different flow and/or filtering capabilities.

Figure 3 shows two perspective views in Figures 3 (A) and (B) of a damping member 100 according to an aspect of the disclosure. The damping member 100 of Figure 3 is the damping member 100 as illustrated in Figure 2. Figure 3 is described under reference to Figures 1 and 2.

Figures 3 illustrate the essentially cylindrical shape of the scaffold structure 105 and the repetitive structure 105a and layered structure 105b along a cylinder axis A (see Figure 3 (B)).

Figure 4 shows sections of damping members 100 in Figures 4 (A) and (B) according to an aspect of the disclosure. Each of the damping members 100 of Figure 4 is an alternative to the damping member 100 as illustrated in Figures 2 and 3. Figure 4 is described under reference to Figures 1 to 3, wherein differences between the damping members 100 of Figures 2 and 3 and the damping members 100 of Figure 4 are described.

Figure 4 (A) illustrates a cross-sectional view (with respect to the axis A, not indicated) of a scaffold structure 105. The scaffold structure 105 comprises a plurality of functional guiding members 115 adapted to guide the air 220 through the damping member 100. Therein, the functional guiding members 115 are structural elements 106 which are arranged within the scaffold structure 105. The functional guiding members 115 are adapted to deflect a main air flow 221 (schematically indicated with a cross as flowing in the drawing plane). The functional guiding members 115 to deflect a main air flow 221 may be formed as channels which are adapted to guide the air 220 directedly along the channel, e.g., in along the axis A and/or in a lateral direction (not shown). The functional guiding members 115 are adapted to split the air 220 into a plurality of sub-flows 222 (as indicated by straight arrows with a solid line). The sub-flows 222 are guided laterally from the main air flow 221 and are distributed thereby within the scaffold structure 105. This enhances damping properties.

The damping member 100 defines a flow direction F (see Figure 1) of air 220 being conducted through the damping member 100. The functional guiding member 115 is adapted to reverse at least one component F1 (see Figure 1) of the flow direction F while the air 220 is conducted through the damping member 100 and/or the functional guiding member 115 comprises a labyrinth-type, meandering and/or undulating shape 116.

As shown in Figure 4 (B), the functional guiding members 115 and the size of the pores 110 are different from each other. The damping member 100 drives and/or guides the air 220 to create desirable noise damping properties, enables modelling a desirable flow path within the damping member 100. Further, the scaffold structure 105 may be used to damp and/or reduce vibrations caused by the air flow in addition to capability of the damping member to damp the emission of sound. Further, the scaffold structure 105 achieves a reliable protection of the air exhaust section 210 from environmental influences, such as dust and/or fluids. This may be achieved by a decreasing pore size in the flow direction.

Figure 5 shows a schematic chart of a method 300 according to an embodiment of the disclosure. The method 300 of Figure 5 is a method 300 for manufacturing a damping member 100. Such a damping member 100 is described with reference to Figures 1 to 4. Figure 5 is described under reference to Figures 1 to 4.

The method 300 of Figure 5 comprises the step of: obtaining 310 a model 100' of the damping member 100.

The method 300 comprises additive manufacturing 320, based on the model 100', the damping member 100. Therein, a plurality of damping members 100 may be produced by additive manufacturing 320 and based on the same model 100'. I.e., the method 300 provides a series production of the damping member 100. The quantity of manufactured damping member 100 is adjustable to current needs and scaled rapidly in dependence on the demand.

The model 100' is dependent on a geometry of the valve 205, of the air outlet section 210 and/or of the valve body 206. I.e., building the model 100' depends on the geometry of the valve 205, of the air outlet section 210 and/or of the valve body 206. E.g., the model 100' comprises details relating to the mounting portion 120, and the model 100' is adapted to enable to attach the damping member 100 via the mounting portion 120 to the valve body 206 in the vicinity of the air outlet section 210 so that air 220 may flow through the damping member 100.

Figure 6 shows a schematic of a computer program and/or computer-readable storage medium 400 according to an embodiment of the disclosure. The computer program and/or computer-readable storage medium 400 comprises instructions (not shown) which, when being executed by a data processing device, causes the data processing device to carry out the method 300 as described with reference to Figure 5. Alternatively or additionally, the computer program and/or computer-readable storage medium 400 comprises a data set 100" that represents the model 100' of the damping member 100.

The instructions and/or the data set 100" may be provided as a graphical representation, a program code in any code, in any language and/or in any data format. The computer-readable medium 400 may be and/or comprise any digital data storage device, such as a USB flash drive, hard drive, CD-ROM, SD card and/or SSD card. The computer program does not necessarily have to be stored on such a computer-readable storage medium, but can also be accessed and/or provided via the internet or otherwise.

### List of reference signs (Part of the description)

- 100: damping member
- 100': model
- 100": data set
- 105: scaffold structure
- 105a: repetitive structure
- 105b: layered structure
- 106: structural elements
- 110: pore
- 115: functional guiding member
- 116: shape
- 120: mounting portion
- 130: functional portion

- 200a: vehicle
- 200b: utility vehicle
- 201: pneumatic system
- 201a: pneumatic suspension system
- 201b: pneumatic brake system
- 205: pneumatic valve
- 210: air outlet section
- 220: air

- 300: method
- 310: obtaining
- 320: additive manufacturing

- 400: computer program and/or computer-readable storage medium

- A: axis
- F: flow direction
- F1: component

## Claims

1. Damping member (100) for a pneumatic valve (205) of a pneumatic system (201) of a vehicle (200a), in particular utility vehicle (200b), wherein the valve (205) comprises an air outlet section (210) for exhausting pressurized air (220); wherein
- the damping member (100) is adapted to be mounted to the air outlet section (210) for damping sound emission of the pressurized air (220);
- the damping member (100) comprises a scaffold structure (105); and
- the scaffold structure (105) is adapted to damp the sound emission of the pressurized air (220) by conducting the air (220) through the scaffold structure (105).

2. Damping member (100) as claimed in claim 1, wherein the scaffold structure (105) is a repetitive structure (105a) and/or a layered structure (105b).

3. Damping member (100) as claimed in claim 1 or 2, wherein the scaffold structure (105) comprises a plurality of pores (110) for damping sound emission of the air (220) being conducted through the damping member (100).

4. Damping member (100) as claimed in any one of the preceding claims, wherein the damping member (100) is made by an additive manufacturing process.

5. Damping member (100) as claimed in any one of the preceding claims, wherein
- the scaffold structure (105) comprises a functional guiding member (115) adapted to guide the air (220) through the damping member (100), and
- the functional guiding member (115) is adapted to deflect a main air flow (221) of the air (220) and/or to split the air (220) into a plurality of sub-flows (222).

6. Damping member (100) as claimed in claim 5, wherein
- the damping member (100) defines a flow direction (F) of air (220) being conducted through the damping member (100); and
- the functional guiding member (115) is adapted to reverse at least one component (F1) of the flow direction (F) while the air (220) is conducted through the damping member (100) and/or
- the functional guiding member (115) comprises a labyrinth-type, meandering and/or undulating shape (116).

7. Damping member (100) as claimed in any one of the preceding claims, wherein the damping member (100) is made of a polymer, in particular of a thermoplastic and/or a thermoset polymer, of metal and/or of a composite material.

8. Damping member (100) as claimed in any one of the preceding claims, wherein the damping member (100) comprises a mounting portion (120) for fixating the damping member (100) directly to a valve body (206) of the valve (205).

9. Damping member (100) as claimed in any one of the preceding claims, wherein the damping member (100) comprises one or more functional portions (130) to impede water ingress, for creating a pressure gradient, for self-cleaning and/or for providing a mounting portion for a sensor.

10. Pneumatic system (201) of a vehicle (200a), in particular utility vehicle (200b), wherein the pneumatic system (201) comprises a valve (205) with an air outlet section (210) for exhausting pressurized air (220) and a damping member (100) as claimed in any one of the preceding claims, wherein the damping member (100) is mounted to the air outlet section (210) for damping sound emission of the pressurized air (220) by conducting the air (220) through the damping member (100).

11. Pneumatic system (201) as claimed in claim 10, wherein the pneumatic system (201) is a pneumatic suspension system (201a) and/or a pneumatic brake system (201b).

12. Vehicle (200a), in particular utility vehicle (200b), comprising a damping member (100) as claimed in any one of claims 1 to 9 and/or a pneumatic system (201) as claimed in claim 10 or 11.

13. Method (300) for manufacturing a damping member (100) as claimed in any one of claims 1 to 9, wherein the method (300) comprises the steps of:
- obtaining (310) a model (100') of the damping member (100); and
- additive manufacturing (320), based on the model (100'), the damping member (100).

14. Method (300) as claimed in claim 13, wherein the model (100') is dependent on a geometry of the valve (205), of the air outlet section (210) and/or of a valve body (206).

15. Computer program and/or computer-readable storage medium (400), comprising instructions which, when the program is executed by a data processing device causes the data processing device to carry out the method (300) of claim 13 or 14 and/or comprising a data set (100") that represents the model (100') of the damping member (100) as claimed in any one of claims 1 to 9.
